# EUROPEAN PATENT SPECIFICATION

(11) **EP 2 626 468 B1**
(45) Date of publication and mention of the grant of the patent: **21.10.2015**
(21) Application number: 12155131.1
(22) Date of filing: 13.02.2012
(51) Int. Cl.: E01C 13/08

(54) **Mixed turf and method of making**
Mischrasen und dessen Herstellverfahren
Gazon synthétique et naturel et procédé de fabrication

(43) Date of publication of application: 14.08.2013
(73) Proprietor: Sarris, Nikolaos, 20021 Bollate (MI) (IT)
(72) Inventor: Sarris, Nikolaos, 20021 Bollate (MI) (IT)
(74) Representative: Lunati & Mazzoni S.r.L.

(56) References cited:
- WO-A1-89/01076
- WO-A1-99/56523
- FR-A1- 2 932 196
- FR-A5- 2 244 356
- GB-A- 2 352 954
- US-B1- 6 219 965
- US-B1- 6 691 455

## Description

The present invention relates to a mixed turf, which is partly synthetic and partly natural and is adapted to cover recreational or sports grounds, ornamental or play yards, as described in the preamble of the first claim.

For practical and economical reasons, traditional covers for sports grounds and the like with natural turfs are frequently replaced by covers of synthetic materials simulating the natural turfs.

Particularly known are synthetic blankets simulating natural turfs comprising: a support consisting of a polymeric membrane on which a plurality of filaments of polymeric material too are fastened, which filaments extend vertically simulating natural grass blades. These blankets further comprise a filling material superposed on the support, consisting of granular material such as sand or the like, the function of which is stabilisation, protection and cushioning. The filling material and support are permeable or draining and allow water to flow towards the underlying soil.

Also known are mixed turfs, i.e. comprising structures of synthetic material mixed with natural grass, which are more or less efficient and have high costs for accomplishment and/or maintenance of the turf.

For instance, in patent application WO-A-2006/008579 and in patent US-B-7,943,212 it is described a technique concerning insemination of natural grass on the filling material on top of the support of a synthetic blanket. In these forms the support of the synthetic blanket is not biodegradable and acts as a barrier for roots. Therefore it does not enable deep penetration of the radical apparatus of the natural grass. Roots in fact can only grow horizontally inside the filling material which is about 4-5 cm thick. These blankets therefore require frequent watering in hot months. In addition, under hot and wet conditions the natural grass runs the risk of choking thus promoting development of fungal diseases.

Monitoring of this blankets therefore asks for particular attention, which is very expensive. Finally, the turf tends to shrink in a short period of time, and resistance to trampling and pulling of this blanket is limited.

Patent US-B-6,145,248 discloses techniques concerning insemination of natural glass on synthetic blankets that from a theoretical point of view enable deep penetration of the radical apparatus of the natural grass, due to biodegradation of the support of the synthetic blanket. To enable this development, the support of the synthetic blanket is partly biodegradable and increases its porosity in time, so as to promote penetration of the radical apparatus over time.

However, in this case, the support reduces its strength and the fastening resistance of the artificial grass to the primary support that would increasingly decrease over time, thus eliminating the advantages of mixed blankets. In addition, degradation of the employed materials requiring time contrasts with the necessity for quick growing of the turf that is usually developed within 2-3 months, during the summer pause of the agonistic seasons. During the first period, penetration of the radical apparatus into the underlying support is limited due to a poor circulation of air in the soil by effect of the density of the water that deposits on the support of the artificial blanket. Thus the geotropic angle of the radical apparatus of the lawn essences is modified and a horizontal development is promoted that improves formation of the so-called "felt" that reduces the gas exchange between soil and air even more. Use of the ground 2-3 months after insemination makes the upper layer even more compact and further facilitates formation of the "felt" on the surface so that the advantages of the artificial grass are quickly eliminated. In fact, remedy appears to be difficult and operations are required that use machinery tending to spoil the structure of the artificial grass. The system is not widespread due to its high cost for accomplishment and maintenance. PCT application WO 99/56523 discloses a further mixed turf.

Also patent US-B-6,372,310 discloses techniques concerning insemination of natural grass on synthetic blankets that, from a theoretical point of view, enable deep penetration of the radical apparatus of the natural grass through openings, formed in the support holding the synthetic filaments, that are obtained from a wider texture between the weft and warp rows, or result from degradation of some rows over time. The present case is distinguishable from the previous one because the plurality of holes are replaced by interspaces between the weft and warp rows that are woven in a spaced manner or, as it happens in some cases, said interspaces tend to be formed due to partial use of biodegradable material over time. Weaving of the filaments in the intersection point of the support leaves more space to growth of the natural lawn on the surface and is less expensive because less plastic material is used. However penetration of the radical apparatus into the underlying support is limited due to the same reasons as above mentioned for the previous system. Grip of the grass filaments is not ensured in the support, as it results from specialised laboratory tests for artificial grass. Quickly, the advantages of the artificial grass are cancelled and there is an increase in the maintenance costs.

Another type of technology, above all connected with football grounds contemplates introduction, during installation, of artificial yarns into the natural grass ground: about 20 million artificial yarns for a sports ground of 7000 m² up to 20 cm in depth in the sandy soil to better bear the football "traffic". Although this method respects the agronomic principles for development of natural grass, it is restricted to sandy beds, is complicated and expensive and requires particular machinery of weak efficiency and high maintenance costs.

Finally, all systems contemplating drainage of the synthetic blankets, mixed blankets and also of many turfs have the drawback of using drainage systems delivering rainwater to the sewer system or directly into the water table through absorbing wells, with all risks resulting therefrom. It is for that reason that natural grass carpets for play grounds and the like, contrary to grass soils in the country are considered as impermeable.

Under this situation, the technical task underlying the present invention is to conceive a mixed turf capable of substantially obviating the mentioned drawbacks. Within the scope of this technical task it is an important aim of the invention to envisage a mixed turf that is strong and has high quality features.

Another important aim of the invention is to obtain a mixed turf that is cheap and of simple installation and maintenance.

A still further aim of the invention is to provided a mixed turf enabling quick water infiltration through the draining layers without weighing on the flow rate of the sewer system.

The technical task and the aims specified are achieved by a mixed turf as claimed in the appended claim 1.

Preferred embodiments are highlighted in the sub-claims.

The features and advantages of the invention are hereinafter clarified by the detailed description of a preferred embodiment of the invention, with reference to the accompanying drawings, in which:
**Fig. 1** shows a diagrammatic section of the mixed turf according to the invention;
**Fig. 2** is a diagrammatic exploded view of a portion of mixed turf according to the invention;
**Fig. 3** shows a further diagrammatic section of the mixed grass blanket according to the invention;
**Fig. 4** is a diagrammatic view from above of the mixed turf according to the invention.

With reference to the mentioned figures, the mixed turf according to the invention is generally identified by reference numeral **1.**

Suitably it is part of a soil **10** further comprising a substrate **11,** hereinafter described.

Blanket 1 is adapted to constitute a substantially grassy surface, the surface of a sports ground for example, and preferably of a football ground, or also a surface to be used as play yard or for ornamental and decoration purposes or others.

The mixed blanket 1 comprises a synthetic turf **2** and natural grass **3,** disposed inside said synthetic turf, as hereinafter described.

In detail, the synthetic turf 2 comprises a support **4,** described below, and a plurality of synthetic filaments **5** simulating the natural grass.

Suitably, support 4 is a draining and above all transpiring support, both in the dry and the wet state. In addition, support 4 is advantageously non-biodegradable, and more preferably fully non-biodegradable, to keep the grip features of filaments **5** unchanged in time. In addition this layer does not contemplate spreading of polymers such as polyurethane or latex that make the support impermeable on the lower part thereof, which on the contrary traditionally happens.

Support 4 preferably comprises at least one geonet **4a** coupled with a geotextile **4b** of non-woven fabric.

Coupling of geotextile materials and geonets is known per se as a support for synthetic grass. In particular, both geonets and geotextiles are materials used in the agricultural field to consolidate the soil or for similar purposes. Geotextiles of non-woven fabric are on the contrary usually made up of extruded filaments disposed in a uniform manner and subsequently interstitched so as to constitute a felt or the like.

In this case the geonets 4a are of such sizes as to enable passage of the radical apparatus of the natural grass 3, as specified hereinafter.

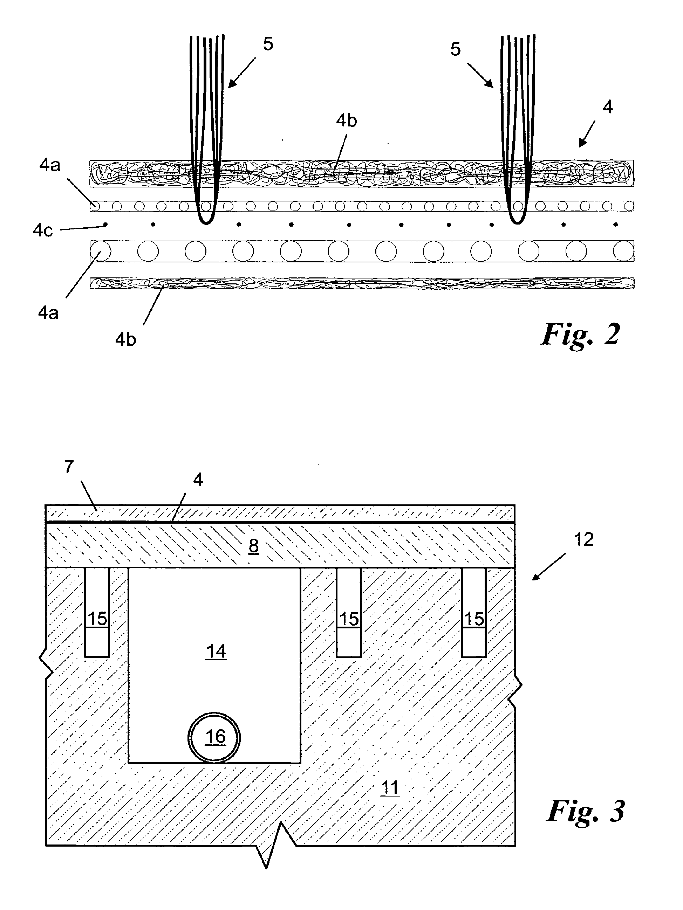

In greater detail, two geonets 4a are present, each coupled to a geotextile 4b. The two assemblies of geonets 4a and geotextiles **4b** internally enclose filaments 5 (Fig. 2). The same filaments 5 are inserted, by the known technique referred to as "tufting" and by gluing, with melting of polymeric particles **4c** and in particular polyethylene, to the geonet 4a coupled to the upper geotextile 4b. In particular, the outer layers of support 4 are both geotextiles.

The upper geonet 4a is preferably of polyester and has a basis weight included between 25 g/m² and 100 g/m², and more preferably between 30 g/m² and 60 g/m² and square meshes or the like of width included between 0.5 mm and 4 mm.

The upper geotextile 4b is preferably of polyester and has a basis weight included between 80 g/m² and 300 g/m², and more preferably between 150 g/m² and 250 g/m².

More preferably, the overall basis weight of the geotextile 4b and upper geonet 4a is included between 180 g/m² and 310 g/m².

The lower geonet 4a is preferably of polyester and has a basis weight included between 30 g/m² and 120 g/m², and more preferably between 35 g/m² and 60 g/m² and square meshes or the like of width included between 2 mm and 6 mm.

The lower geotextile 4b is preferably of polyester and has a basis weight included between 20 g/m² and 100 g/m², and more preferably between 40 g/m² and 80 g/m²_{.}

More preferably, the overall basis weight of the geotextile 4b and lower geonet 4a is included between 75 g/m² and 150 g/m².

The support 4 is as a whole substantially permeable to water and above all transpiring and enables free circulation of gasses in the soil. By the term "as a whole" it is intended that the whole surface, on a macroscopic scale, of the support has permeability and transpirability features resulting from the choice of the microscopic features of the support. Therefore this feature does not only belong to holes or macroscopic openings present in the support, which on the contrary happens in known supports.

The synthetic filaments 5 are preferably stitched by said tufting geonet 4a coupled to the upper geotextile 4b and preferably disposed in groups of filaments 5a. They suitably have a length included between 4 cm and 7 cm and are preferably of new generation polyethylene that is softer with special ribs to ensure greater resilience. The space between the synthetic filaments 5 is optimised to enable the presence of room for growth of natural grass 3. In particular, the synthetic filaments 5 are disposed in spaced parallel rows at a distance between 1 cm and 6 cm and more preferably between 2 cm and 4 cm. In addition, in some regions, in the regions with more "traffic" in a football ground for example, such as the goalkeeper's regions, the synthetic filaments 5 can be disposed with greater density. In particular, the synthetic filaments 5 do not exceed, in terms of density of arrangement in the soil, 10%-30% of the density of arrangement of the natural grass 3 having the desired density.

The grassy soil 10 further comprises an upper layer **7** disposed on support 4 and a lower layer **8** bearing support 4 and is therefore in contact with support 4 and the upper layer 7.

Suitably, the upper layer 7 is mainly formed with sandy material. In detail, the upper layer 7 is made up of: crushed stones and sand the volume of which preferably represents 40% to 90% of the overall volume of the upper layer 7, organic material of vegetable origin, the volume of which preferably represents 5% to 60% of the overall volume of the upper layer 7, optionally a fraction of sand of volcanic origin, the volume of which is preferably smaller than 30% of the overall volume of the upper layer 7, and optionally agricultural earth the volume of which is preferably smaller than 15% of the overall volume of the upper layer 7.

The crushed stones and sand are of siliceous nature without the presence of active limestone, with pH values preferably included between 6.0 and 7.5, more preferably between 6.5 and 6.9. The crushed stone and sand sizes can suitably vary and the particle size curve has a fraction exceeding 85% that is between 0.05 mm and 2.00 mm, preferably between 0.20 mm and 2.00 mm and a fraction lower than 15% that is between 2 mm and 4 mm.

Said organic material of vegetable origin consists of blond, brown or black peat and possibly, of coconut, cork or other vegetable organic material.

The sand of volcanic origin consists of volcanic lapillus and pozzolan, the particle size of which is 0.05 and 3.00 mm.

The upper layer 7 preferably has thickness included between 2 cm and 4 cm and leaves a portion clear of synthetic filaments 2 of a length preferably included between 1.5 cm and 3 cm. In addition, layer 7 enables drainage and is able to improve consistency of the ground surface, in particular for sustaining the player while playing, simultaneously promoting growth of the natural grass carpet.

The lower layer 8 is a draining vegetable layer in contact with substrate 11. It is preferably made up of inert material consisting of crushed stones the volume of which is preferably smaller than 90% of the overall volume of the lower layer 8, inert material consisting of sand the volume of which is preferably smaller than 90% of the overall volume of the lower layer 8, inert material of volcanic origin the volume of which is preferably included between 10% and 40% of the overall volume of the lower layer 8 and organic material of vegetable origin, like the so-called "blond peat", the mass of which is preferably included between 5% and 20% of the overall mass of the lower layer 8.

Advantageously, the inert materials consisting of crushed stones are of siliceous origin without active limestone and have pH values included between 6.0 and 7.5, preferably between 6.5 and 6.9. The size varies between 3 mm and 15 mm, preferably between 6 mm and 12 mm. The sand is of siliceous nature without active limestone and has pH values included between 6.0 and 7.5, preferably between 6.5 and 6.9 and its size varies and shows a particle size curve having a fraction exceeding 85% that is between 0.05 mm and 2 mm, preferably between 0.25 mm and 2. The inert materials of volcanic origin are of the volcanic lapillus and pozzolan type, the particle size of which is included between 3 mm and 5 mm. Layer 8 is doubled if substrate 11 is arid, unsuitable for growth of the grass blanket, preferably with crushed stones of siliceous nature as previously specified or better with the same material as pointed out above.

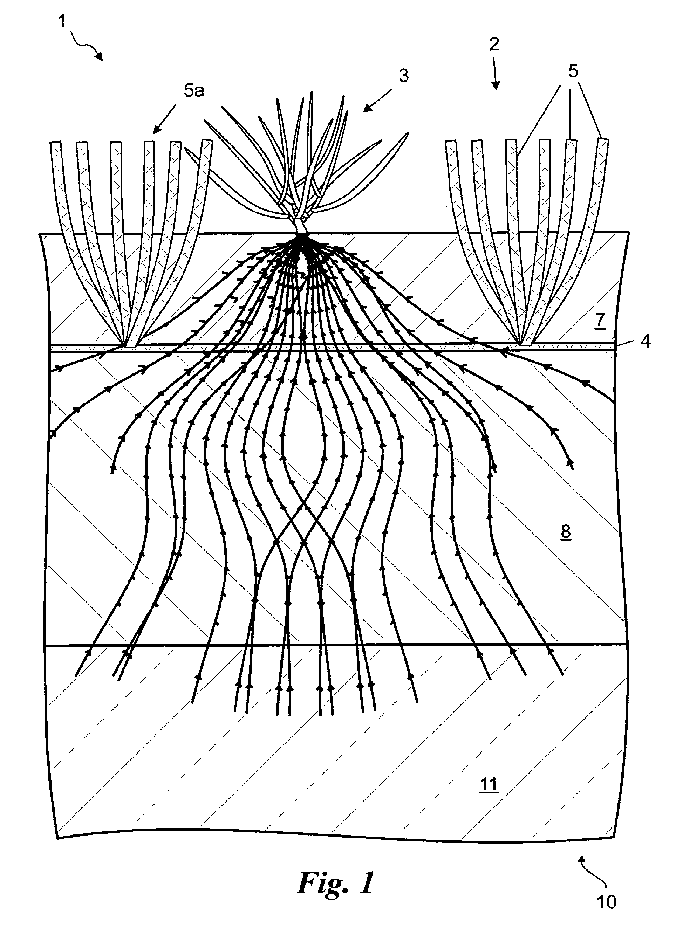

The turf further comprises natural grass 3, as previously specified. The natural grass 3 is disposed on blanket 1 together with the synthetic blanket 2 and preferably has an average presence 3 to 10 times higher than the average amount of the synthetic blanket 2 present on soil 10. The amount can be for example visually measured, by comparing the groups of synthetic filaments 5 and the tufts of natural grass 3. The natural grass is supported by the upper surface of the upper layer 7 and comprises a radical apparatus that advantageously extends over the whole upper layer 7, goes beyond support 4 and also extends along the lower layer 8 (Fig. 1) and preferably also along part of substrate 11.

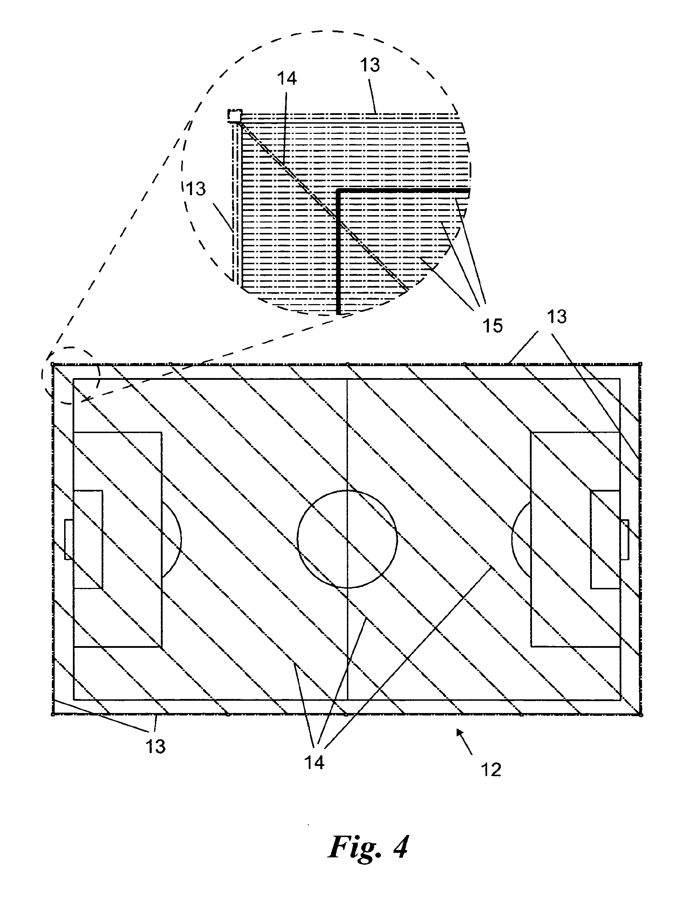

The substrate 11 consists of an existing soil, an agricultural soil or the like, for example. It comprises a drainage system **12** consisting of trenches of various shapes and sizes, as shown in Figs. 3 and 4.

In particular, system 12 comprises perimetric headers **13,** disposed on the perimeters of the sports ground or the like (Fig. 4) and secondary drains **14** such extending as to at least partly join different portions of the perimetric headers and more preferably made diagonally relative to headers 13 (Fig. 4). Said headers 13 and drains 14 extend starting from the upper surface of substrate 11, bordering on the lower layer 8. Their widths are included between 5 cm and 60 cm. In particular, the perimetric headers 13 preferably have rectangular section and lateral sizes included between 30 cm and 60 cm and vertical sizes included between 40 cm and 70 cm, while the secondary drains 14 are preferably of rectangular section too and have lateral sizes included between 8 cm and 35 cm and vertical sizes included between 20 cm and 40 cm.

In addition, both headers 13 and drains 14 comprise inner pipelines consisting of microperforated pipelines **16** placed in trenches of varying sizes and filled with crushed stones or the like.

The drainage system 12 further comprises a plurality of micro-drains **15** connected for fluid passage with said drains 14 and consisting of closely spaced trenches, the mutual distance of which is included between 15 mm and 35 mm. They are preferably disposed parallel to each other, perpendicular to the surface slope of the soil, parallel to the two perimetric headers 13 for example (Fig. 4), of bigger size if the ground is rectangular. They too extend starting from the upper surface of substrate 11 and have depth included between 10 cm and 25 cm and trench width included between 2 cm and 6 cm (Fig. 3). Finally, in arid soils drains are replaced by a double lower layer 8. Ultimately, an automatic watering system consisting of irrigators or sprinklers known by themselves, of 22 m range is interlocked with blanket 1.

The invention comprises a new process for creating a mixed turf 1 as previously described as to its structure.

In particular, this process comprises providing the substrate 11 with the described drainage system 12, arranging the lower layer 8 on it, disposing the synthetic blanket 2, covering the synthetic blanket with the upper layer 7 and arranging the natural grass 3. The natural grass 3 is preferably admitted and obtained by sowing on the spot. Alternatively, the upper layer 7 and natural grass 3 are obtained in a nursery and subsequently transplanted onto the described structure, afterwards cultivation thereof taking place with the traditional methods of grass carpets. Settlement of the fresh seedling is facilitated due to shading of the artificial glass that also simplifies subsequent maintenance thereof. In the coldest periods the artificial yarns protect the fresh seedling from intense cold and promote settlement of new seedling.

The mixed turf 1 according to the invention and the described process achieve important advantages. In fact, the applicant has surprisingly found that known structures comprising supports consisting of substantially impermeable membranes provided with openings or holes of macroscopic sizes did not enable transpiration and gas exchange between soil and air due to density of the water deposited on the support of the artificial blanket and obstructing said holes or openings. The applicant has therefore unexpectedly found that the described support 4, provided with permeability and perspiration capability given by the microscopic features of support 4 and extending over the whole surface of the support 4 itself, enabled water and air passage, contrary to what could appear at first sight.

Blanket 1 therefore allows deep proliferation of the radical apparatus and fastening into the support through the radical apparatus of the natural grass 3. Thus the described combination of synthetic blanket 2 and natural grass 3 makes the natural grass 3 resistant to summer drought, trampling, and horizontal pulling when slip occurs in playing and provides a high play comfort.

More specifically, the artificial yarns protect the leaf apparatus and above all the crown which is the most delicate part of the plant. At the same time the radical apparatus extends vigorously, has a deep growth and clings to the support 4 thus forming a consistent turf of mixed grass resisting to trampling and the slip action of players. Damages for use of the ground are limited, so that a uniform and safe surface for playing is maintained, while at the same time money is saved in terms of extraordinary maintenance.

The mixed turf 1 is also of simple and relatively cheap installation. The rainwater is kept in the soil between the micro-drains, and the excess water is dispersed in the soil and is evacuated into the sewer system or the water table only in a minimum amount.

In addition, the conformation of the drainage system 12 combines well with the described blanket 1 probably due to the described type of support 4 and allows better hydration of the natural grass 3.

In particular, the rainwater passes through the upper layer 7, support 4 and lower layer 8, and is conveyed into the micro-drains 15. The function of the lower layer 8 and micro-drains 15 is that of quickly absorbing the rainwater and irrigation water causing the soil between the micro-drains 15 to be moistened, said water being then given back to the natural grass 3 in the form of moisture so that much of the irrigation water can be saved.

It is therefore easier to increase the intervals between one irrigation and the following one, which condition promotes rich and deep rooting, which is a fundament quality for increasing the strength of the natural lawn.

The excess water flows into headers 13 and drains 14 and is drained in the underlying soil thus avoiding delivery of the rainwater to the sewer system, which will help in preventing flooding of the covered ground during strong rainfalls, while at the same time enabling growth of the radical apparatus of the turf that, once reached the lower layer 8 or substrate 11, better utilises the water reserves and the nutritional elements therein present, inclusive of those integrated by manuring during the subsequent maintenance.

The grass soil 10 thus obtained does not retain water and prevents formation of impermeable barriers by effect of its density, at the same time maintaining two fundamental features, i.e. permeability and transpiration, also under conditions of excessive moisture in the soil, capable of enabling easy and rich penetration of the radical apparatus of the natural blanket until the original soil.

In case of strong rainfalls, penetration of the rain through the described upper layer 7 and lower layer 8 is ensured by the pores that are formed due to use of the described sizes. In this manner, the grass surface remains practicable without losing its physical properties during the sports activity.

The invention is susceptible of variations falling within the scope of the inventive idea expressed in the independent claims.

## Claims

1. A mixed turf (1) disposed on a soil (10) and comprising: a synthetic turf (2), natural grass (3) disposed inside said synthetic turf (2), said synthetic turf (2) comprising synthetic filaments (5) adapted to simulate grass blades and a support (4) consisting of a non-biodegradable membrane sustaining said synthetic filaments (5), said mixed turf (1) being **characterised in that**: said support (4) comprises at least one geonet (4a) of polyester and at least one geotextile (4b) of non-woven fabric of polyester and it is on the whole, substantially draining and transpiring, said features of the support (4) resulting from its microscopic features, and allows passage therethrough of the root system of said natural grass (3).

2. A mixed turf (1) as claimed in claim 1, wherein said at least one geotextile (4b) has a basis weight included between 20 g/m² and 300 g/m².

3. A mixed turf (1) as claimed in one or more of the preceding claims, wherein said support (4) comprises two of said geonets (4a) and two of said geotextiles (4b), said geotextiles (4b) constituting the outer faces of the support (4) and said geonets (4a) enclosing said filaments (5).

4. A mixed turf (1) as claimed in one or more of the preceding claims, wherein the arrangement density in the soil of said synthetic filaments (5) is less than 10% to 30% of the arrangement density of said natural grass (3).

5. A mixed turf (1) as claimed in one or more of the preceding claims disposed on a soil (10) comprising: an upper layer (7), disposed on said support (4), and having a thickness included between 2 cm and 4 cm.

6. A mixed turf (1) as claimed in claim 5 comprising: said upper layer (7), mainly made up of sandy material and disposed on said support (4), a lower layer (8) adapted to sustain said support (4) and in contact with said support (4) and a substrate (11) bordering on said lower layer (8).

7. A mixed turf (1) as claimed in claim 5 or 6, wherein said sandy material of said upper layer (7) consists of crushed stones and sand having pH values included between 6.0 and 7.5.

8. A mixed turf (1) as claimed in one or more of claims 6-7, wherein said sandy material of said upper layer (7) consists of crushed stones and sand a fraction of which higher than 85% having particle sizes included between 0.05 mm and 2.00 mm.

9. A mixed turf (1) claimed in one or more of claims 6-8, wherein said lower layer (8) comprises organic material of vegetable origin, consisting of a mass relative to the overall mass of the lower layer (8) included between 10% and 20%.

10. A mixed turf (1) as claimed in one or more of claims 6-9, wherein said substrate (11) comprises a drainage system (12) consisting of trenches and including: perimetric headers (13) disposed on perimeters of the soil (10) and of secondary drains (14) extending over said soil and at least partly joining different parts of said perimetric headers (13).

11. A mixed turf (1) as claimed in claim 10, wherein said drainage system (12) comprises a plurality of micro-drains (15) consisting of closely spaced trenches connected for fluid passage with said headers (13) and drains (14)

12. A process for creating a mixed turf (1) as claimed in one or more of the preceding claims, wherein said synthetic turf (2) is first positioned and subsequently said natural grass (3) is disposed.

13. A process for creating a mixed turf (1) as claimed in the preceding claim, wherein said natural grass (3) is admitted by sowing on the spot.

14. A process for creating a mixed turf (1) as claimed in claim 13, wherein said natural grass (3) is obtained in a nursery and subsequently transplanted onto said turf (1).

## Patentansprüche

1. Auf einem Boden (10) ausgelegter Mischrasen (1), der Folgendes umfasst: einen synthetischen Rasen (2), im Inneren des genannten synthetischen Rasens (2) enthaltenes Naturgras (3), wobei der genannte synthetische Rasen (2) synthetische Fäden (5) umfasst, die geeignet sind, Grasfäden nachzubilden, sowie eine aus einer nicht biologisch abbaubaren, die genannten synthetischen Fäden (5) tragenden Membran bestehende Unterlage (4), wobei der genannte Mischrasen (1) durch Folgendes gekennzeichnet ist: die genannte Unterlage (4) umfasst mindestens ein Geonetz (4a) aus Polyester und mindestens eine Geotextilie (4b) aus Vliesstoff aus Polyester und ist im Wesentlichen in ihrer Gesamtheit entwässernd und atmungsaktiv, wobei sich die genannten Eigenschaften der Unterlage (4) aus ihren mikroskopischen Eigenschaften ergeben und das Überqueren des Wurzelstocks des genannten Naturgrases (3) gestattet wird.

2. Mischrasen (1) nach Anspruch 1, bei dem die genannte wenigstens eine Geotextilie (4b) ein Flächengewicht zwischen 20 g/m² und 300 g/m² aufweist.

3. Mischrasen (1) nach Anspruch 2, bei dem die genannte Unterlage (4) zwei der genannten Geonetze (4a) und zwei der genannten Geotextilien (4b) umfasst, wobei die genannten Geotextilien (4b) die Außenseiten der Unterlage (4) darstellen und die genannten Geonetze (4a) die genannten Fäden (5) einschließen.

4. Mischrasen (1) nach einem oder mehreren der vorangegangenen Ansprüche, bei dem die genannten synthetischen Fäden (5) im Vergleich zur Anordnungsdichte des genannten Naturgrases (3) eine zwischen 10 % und 30 % geringere Anordnungsdichte aufweisen.

5. Mischrasen (1) nach einem oder mehreren der vorangegangenen Ansprüche, ausgelegt auf einem Boden (10), der Folgendes umfasst: eine obere auf der genannten Unterlage (4) angeordnete Schicht (7) mit einer Stärke zwischen 2 cm und 4 cm.

6. Mischrasen (1) nach Anspruch 5, der eine vorwiegend aus sandigem Material bestehende und über der genannten Unterlage (4) angeordnete Schicht (7), eine untere Schicht (8), die geeignet ist, die genannte Unterlage (4) zu tragen und sich in Kontakt mit der genannten Unterlage (4) befindet, und ein Substrat (11), das an die genannte untere Schicht (8) angrenzt, umfasst.

7. Mischrasen (1) nach Anspruch 5 oder 6, bei dem das genannte sandige Material der genannten oberen Schicht (7) aus Splitt und Sand mit einem pH-Wert zwischen 6.0 und 7.5 besteht.

8. Mischrasen (1) nach einem oder mehreren der Ansprüche 6-7, bei dem das genannte sandige Material der genannten oberen Schicht (7) für einen Anteil von mehr als 85 % aus Splitt oder Sand mit einem Flächengewicht zwischen 0,05 mm und 2,00 mm besteht.

9. Mischrasen (1) nach einem oder mehreren der Ansprüche 6-8, bei dem die genannte untere Schicht (8) zu einem Gewicht zwischen 10 % und 20 % im Verhältnis zum Gesamtgewicht der unteren Schicht (8) organisches Material pflanzlichen Ursprungs umfasst.

10. Mischrasen (1) nach einem oder mehreren der Ansprüche 6-9, bei dem das genannte Substrat (11) ein Entwässerungssystem (12) bestehend aus Gräben umfasst und Folgendes einschließt: umlaufende, auf dem Umfang des Bodens (10) angeordnete Kollektoren (13) und sekundäre Entwässerungen (14), die auf dem genannten Boden verlaufen und die verschiedenen Teile der genannten umlaufenden Kollektoren (13) wenigstens teilweise verbinden.

11. Mischrasen (1) nach Anspruch 10, bei dem das genannte Entwässerungssystem (12) eine Vielzahl von Mikroentwässerungen (15) bestehend aus nebeneinander liegenden Gräben umfasst, die für den Mediumdurchfluss mit den genannten Kollektoren (13) und Entwässerungen (14) verbunden sind.

12. Herstellungsverfahren eines Mischrasens (1) nach einem oder mehreren der vorangegangenen Ansprüche, bei dem der genannte synthetische Rasen (2) und anschließend das genannte Naturgras (3) positioniert werden.

13. Herstellungsverfahren eines Mischrasens (1) nach dem vorangegangenen Anspruch, bei dem das genannte Naturgras (3) durch Säen eingebracht wird.

14. Herstellungsverfahren eines Mischrasens (1) nach Anspruch 13, bei dem das genannte Naturgras (3) in der Gärtnerei gezüchtet und anschließend in den genannten Rasen (1) umgepflanzt wird.

## Revendications

1. Gazon synthétique et naturel (1), posé sur un sol (10) et comprenant : un gazon synthétique (2), de l'herbe naturelle (3) placée à l'intérieur dudit gazon synthétique (2), ledit gazon synthétique (2) comprenant des filaments synthétiques (5) aptes à simuler des brins d'herbe et un support (4) constitué d'une membrane non biodégradable soutenant lesdits filaments synthétiques (5), ledit gazon synthétique et naturel (1) étant **caractérisé en ce que** : ledit support (4) comprend au moins une géogrille (4a) en polyester et au moins un géotextile (4b) en tissu non-tissé en polyester et est essentiellement en sa totalité, drainant et transpirant, lesdites caractéristiques du support (4) résultant de ses caractéristiques microscopiques et permet le passage à travers l'appareil radical de ladite herbe naturelle (3).

2. Gazon synthétique et naturel (1) selon la revendication 1, dans lequel ledit au moins un géotextile (4b) a un grammage compris entre 20 g/m² et 300 g/m².

3. Gazon synthétique et naturel (1) selon la revendication 2, dans lequel ledit support (4) comprend deux desdites géogrilles (4a) et deux desdits géotextiles (4b), lesdits géotextiles (4b) constituant les faces extérieures du support (4) et lesdites géogrilles (4a) renfermant lesdits filaments (5).

4. Gazon synthétique et naturel (1) selon une ou plusieurs des revendications précédentes, dans lequel lesdits filaments synthétiques (5) sont inférieurs en densité de disposition sur le sol à une quantité comprise entre 10 % et 30 % par rapport à la densité de ladite herbe naturelle (3).

5. Gazon synthétique et naturel (1) selon une ou plusieurs des revendications précédentes, disposé sur un sol (10) comprenant : une couche supérieure (7), disposée sur ledit support (4) et ayant une épaisseur comprise entre 2 cm et 4 cm.

6. Gazon synthétique et naturel (1) selon la revendication 5, comprenant une couche supérieure (7), composée en majorité de matière sablonneuse et disposée au dessus dudit support (4), une couche inférieure (8), apte à soutenir ledit support (4) et en contact avec ledit support (4) et un substrat (11) limitrophe de ladite couche inférieure (8).

7. Gazon synthétique et naturel (1) selon les revendications 5 ou 6, dans lequel ladite matière sablonneuse de ladite couche supérieure (7) est pierraille et sable ayant des valeurs de pH comprises entre 6,0 et 7,5.

8. Gazon synthétique et naturel (1) selon une ou plusieurs des revendications 6-7, dans lequel ladite matière sablonneuse de ladite couche supérieure (7) est pierraille et sable ayant une granulométrie comprise entre 0,05 mm et 2,00 mm pour une fraction supérieure à 85 %.

9. Gazon synthétique et naturel (1) selon une ou plusieurs des revendications 6-8, dans lequel ladite couche inférieure (8) comprend de la matière organique d'origine végétale, pour une masse par rapport à la masse totale de la couche inférieure (8) comprise entre 10 % et 20 %.

10. Gazon synthétique et naturel (1) selon une ou plusieurs des revendications 6-9, dans lequel ledit substrat (11) comprend un système de drainage (12) constitué de tranchées et comprenant : des collecteurs périmétraux (13), disposés sur périmètres du sol (10) et des drainages secondaires (14) s'étendant sur ledit sol et au moins en partie unissant des parties différentes desdits collecteurs périmétraux (13).

11. Gazon synthétique et naturel (1) selon la revendication 10, dans lequel ledit système de drainage (12) comprend une pluralité de micro-drains (15) constitués de tranchées rapprochées en connexion de passage fluide avec lesdits collecteurs (13) et drainages (14).

12. Procédé pour la réalisation d'un gazon synthétique et naturel (1) selon une ou plusieurs des revendications précédentes, dans lequel est posé ledit gazon synthétique (2) et, ensuite ladite herbe naturelle (3).

13. Procédé pour la réalisation d'un gazon synthétique et naturel (1) selon la revendication précédente, dans lequel ladite herbe naturelle (3) est introduite par ensemencement sur site.

14. Procédé pour la réalisation d'un gazon synthétique et naturel (1) selon la revendication 13, dans lequel ladite herbe naturelle (3) est réalisée en pépinière et transplantée par la suite sur ledit gazon synthétique et naturel (1).
